(19) Europäisches Patentamt / European Patent Office / Office européen des brevets

(11) **EP 3 511 699 B1**

(12) **EUROPEAN PATENT SPECIFICATION**

(45) Date of publication and mention
of the grant of the patent:
**28.04.2021 Bulletin 2021/17**

(51) Int Cl.:
**G01N 21/41** *(2006.01)*    **G01N 30/74** *(2006.01)*

(21) Application number: **18151193.2**

(22) Date of filing: **11.01.2018**

(54) **REFRACTOMETER APPARATUS AND METHOD FOR OPTICALLY MEASURING A REFRACTIVE INDEX DIFFERENCE**

REFRAKTOMETERVORRICHTUNG UND VERFAHREN ZUR OPTISCHEN MESSUNG EINES BRECHUNGSINDEXUNTERSCHIEDS

APPAREIL RÉFRACTOMÈTRE ET PROCÉDÉ DE MESURE OPTIQUE D'UNE DIFFÉRENCE D'INDICE DE RÉFRACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2019 Bulletin 2019/29**

(73) Proprietor: **Postnova Analytics GmbH**
**86899 Landsberg (DE)**

(72) Inventor: **WELZ, Roland**
**86899 Landsberg (DE)**

(74) Representative: **Hoffmann Eitle**
**Patent- und Rechtsanwälte PartmbB**
**Arabellastraße 30**
**81925 München (DE)**

(56) References cited:
**WO-A1-96/24045**        **US-A- 5 233 959**
**US-A1- 2005 168 726**

- **YONG ZHAO: "Determination of saltwater concentration based on optical and electrical dual-differential methods", OPTICAL ENGINEERING., vol. 43, no. 3, 1 March 2004 (2004-03-01), page 732, XP055452098, ISSN: 0091-3286, DOI: 10.1117/1.1645254**
- **HIDEYUKI MINATO ET AL: "REMOTE REFRACTIVE INDEX DIFFERENCE METER FOR SALINITY SENSOR", IEEE TRANSACTIONS ON INSTRUMENTATION AND MEASUREMENT, IEEE SERVICE CENTER, PISCATAWAY, NJ, US, vol. 38, no. 2, 2 April 1989 (1989-04-02), pages 608-612, XP000009590, ISSN: 0018-9456, DOI: 10.1109/19.192359**
- **YINLIN LI ET AL: "Design of a novel refractometer based on electro-optical detection principle", SIGNAL PROCESSING (ICSP), 2010 IEEE 10TH INTERNATIONAL CONFERENCE ON, IEEE, PISCATAWAY, NJ, USA, 24 October 2010 (2010-10-24), pages 2543-2546, XP031817604, ISBN: 978-1-4244-5897-4**

**Description**

FIELD OF THE INVENTION

The present invention relates to a refractometer apparatus and a method using the same for optically measuring a refractive index difference, and in particular to a refractometer apparatus and method for measuring a refractive index difference between a sample fluid in a sample cell and a reference fluid in a reference cell after light passing through these cells.

BACKGROUND

Different refractometer apparatuses and methods using them are known. For example, a differential refractometer (DRI) or refractive index detector (RI or RID) is a detector that measures the refractive index of an analyte relative to a solvent, wherein the analyte may be dissolved in a solvent and placed in a sample cell and the solvent placed in a reference cell.

The principle on which these detectors are based on is that according to the laws of optical refraction, light traversing a medium boundary, e.g. leaving one material and enters another, experiences a refractive index change so that it bends or refracts. The larger the refractive index change, the more the light bends when it enters from one material into another one and thus changes its propagation direction.

These kinds of detectors may be used as detectors for liquid chromatography or size exclusion chromatography. In more detail, a differential refractometer may contain a flow cell with two parts or chambers each forming individual cells one for a sample, such as an analyte in a reference solvent, and one for a reference solvent. The differential refractometer measures the refractive index of both components which are usually fluids, i.e. gases or liquids. When only solvent passes through the sample cell the measured refractive index obtained from both cells is the same. However, when an analyte passes through the flow cell the two measured refractive indices are different. The difference then appears as a peak in a chromatogram.

The difference in refractive index between a sample and a reference solvent can be measured with a Differential Refractive Index Detector (DRI Detector). A DRI detector measures the refractive index of a dissolved sample, e.g. an analyte dissolved in a solvent, relative to the pure solvent (reference solution). The resulting value is called the refractive index increment and is defined as dn/dc, the slope of the linear function that is created when the change in refractive index is plotted versus the change in concentration of a sample. The corresponding unit of dn/dc is mL/g.

The dn/dc value depends on the wavelength of the light source that is used in the DRI detector, the temperature and the solvent that is used to dissolve the sample.

The DRI detector responds to a sample described by the following equation:

```
Area of DRI detector signal =
Calibration Constant of DRI detector  x  dn/dc  x  concentration
```

Using a DRI detector that has been calibrated with a standard with known dn/dc and known concentration, the concentration of a sample can be determined when the dn/dc value for the sample is known. Using this concentration and the known dn/dc the molar mass of a sample can be measured using a static light scattering detector.

For detecting the difference in refractive index between a sample and a reference solvent (dn/dc) some prior art DRI detectors use a diode or a quadrant photodetector having two to four quadrants.

For DRI detectors having one photodiode the light beam is passed through the reference cell and subsequently to the sample cell, reflected at a mirror and again supplied to the two cells. Using an adjustable glass plate, i.e. a zero plate, a light beam is set such that when it traverses a flow cell with pure eluent maximal intensity is reached at the photodiode. If an analyte passes through the flow cell, the refractive index changes with respect to the eluent in the reference cell. More specifically, the light beam is refracted or bent by the change in refractive index of the analyte solution and the intensity at the photodiode is not maximal anymore. This change in photocurrent at the photodiode leads to a peak in the chromatogram. However, using a single photodiode leads to a differential refractometer, such as a DRI detector, having low sensitivity.

More recent differential refractometers, such as in US patent 5,398,110, use photodiodes having two to four quadrants instead of a single photodiode. Refractions of the light beam due to refractive index changes are measured by comparing the voltages of different quadrants. If the voltage in one quadrant increases while it decreases in the other quadrant, the beam was refracted by a refractive index change in the flow cell. A problem of this technique is that the maximum sensitivity is reached once one quadrant receives all the light of the light beam.

Even more recent differential refractometers use photodiode arrays or CCD (charge coupled device) cameras as photodetectors. These refractometers have a larger dynamic range due to a large number of pixels and are able to detect small changes in refraction due to their small pixel sizes. However, these differential refractometers have other drawbacks.

For example, a center point of the light spot on the CCD chip cannot be obtained without digital signal processing; basically an analysis of the image of the light spot acquired on the CCD chip is needed. To do this, all pixels have to be evaluated, i.e. the charges of all pixels have to be read out and analyzed. This process takes time and limits the sampling rate. To determine an exact position of the light spot, an interpolation of neighboring pixels is necessary. For changes in the position which are smaller than the distance between two pixels, a change in position cannot be determined. To overcome this limitation a complex pattern may be given to the light beam which, however, may not be able to completely traverse the flow cell. As a result, fluctuations due to effects from fluid flow in the flow cell may increase.

Additionally, the performance of CCD sensors is limited to certain light intensities and absorbing or fluorescing samples further limit the performance. Effects, such as blooming, may transfer charges in neighboring pixels rendering the position determination even more complex and inaccurate.

US 2005/168726 A1 relates to an enhanced sensitivity differential refractometer incorporating a photodetector array. Using a multi-element photo array provides the basis for measurement of differential refractive index values with a combination of sensitivity of measurement and concurrent range of measurement.

The detector structure provides equal sensitivity irrespective of deflection within the range. The transmitted light beam is tailored to provide a spatial variation of the light intensity at the array improving thereby the precision of measurement of its displacement.

"Determination of saltwater concentration based on optical and electrical dual-differential methods" by Young Zhao et al., published in Optical Engineering, vol. 43, no. 3, page 732, relates to a differential refractometer which uses a laser beam of a HeNe-Laser which is passed first through a cell with distilled water and then through saltwater in which a prism is placed which back reflects the beam. Before the laser beam hits the PSD, it passes through an unspecified lens.

"Remote refractive index difference meter for salinity sensor" by Hideyuki Minato et al., published in IEEE Transactions on Instrumentation and Measurement, vol. 38, pages 608-612, relates to a refractometer for measuring a salt concentration using a PSD.

YINLIN LI ET AL describe "Design of a novel refractometer based on electro-optical detection principle" in SIGNAL PROCESSING (ICSP), 2010 IEEE 10TH INTERNATIONAL CONFERENCE ON, IEEE, PISCATAWAY, NJ, USA, 2, pages 2543-2546. This document presents a reflection-type probe structure having three chambers, transmitting/receiving (T/R) chamber, sample chamber and reference chamber. Red light emitted from a small-size semiconductor laser passes through a sample liquid chamber and reference liquid chamber, then reflects back by a right-angle prism, and is filtered by a narrow-band spectral filter, before being finally received by the photosensitive surface of a PSD.

SUMMARY

Therefore, it is an aim to provide a refractometer apparatus and a method using the same which allow detection of refractive index differences with high sensitivity. This is achieved by the independent claims Additional advantageous features of the invention are disclosed in the dependent claims.

According to an advantageous example, the indication of the position of the spot on the active layer is based on a first current from the first electric contact point and a second current from the second electric contact point, wherein the first current and the second current change depending on the position of the spot on the active layer. Therefore, a position of the spot on the active layer, and thus a refractive index difference, can be easily determined from the currents.

According to another advantageous example, a current measurement unit of the apparatus is adapted to measure the first and the second current and a determiner of the apparatus is adapted to determine the position of the spot on the active layer from the measured first and the second current. Therefore, a position of the spot on the active layer, and thus a refractive index difference, can be easily determined from the currents.

According to another advantageous example, the position of the spot on the active layer is determined from the ratio of the difference between the first and the second current to the sum of the first and the second current. Therefore, a position of the spot on the active layer, and thus a refractive index difference, can be easily determined from the currents.

According to another advantageous example, the active layer of the lateral-effect photodiode is adapted to provide position sensitivity so as to enable the continuous determination of the position of the spot on the active layer. Therefore, a position of the spot on the active layer, and thus a refractive index difference, can be determined continuously, i.e. not limited to discrete steps, with high sensitivity and precision.

According to another advantageous example, the measurement cell arrangement comprises an angled transparent interface separating the reference cell and the sample cell each having three side faces. Accordingly, a compact measurement cell arrangement can be provided in which a spatial relationship between the reference cell and the sample cell is fixed.

According to another advantageous example, the refractometer apparatus comprises an aperture adapted to limit parts of the light of the light beam to pass the aperture so that the cross section of the passed light beam reaching the measurement cell arrangement is of the order of a side face of the measurement cell arrangement. Accordingly, the light incident on the measurement cell arrangement can be confined to light traversing the measurement cell arrangement and light reflections and scattering at the edges of the measurement cell arrangement can be reduced.

According to another advantageous example, the refractometer apparatus further comprises a collimating lens arranged between the light source unit and the measurement cell arrangement for collimating light of the light beam. The collimating lens may be part of the optical focusing module. Accordingly, it is easy to set the focus of the light beam to be on the active layer.

According to another advantageous example, the light source unit comprises one or a plurality of LEDs, one or a plurality of lasers, or a lamp. Accordingly, a suitable light source and wavelength can be selected based on the sample to be analyzed.

According to another advantageous example, the light source unit comprises an optical fiber having an interface to be connectable to one or a plurality of LEDs, one or a plurality of lasers, or a lamp. Accordingly, a light source can be placed at a distance from the refractometer apparatus and the numerical aperture at the output of the fiber is largely independent on the light source connected to the input of the fiber which allows better reproducibility when switching light sources.

According to another advantageous example, the light source unit comprises a wavelength selector to switch, preferably electrically, from a light beam of a first wavelength to a light beam of a second wavelength. Accordingly, a suitable wavelength can be selected based on the sample to be analyzed.

BRIEF DESCRIPTION OF THE DRAWINGS

Fig. 1 illustrates elements of a refractometer apparatus according to an embodiment of the invention.

Fig. 2 illustrates elements of a refractometer apparatus according to another embodiment of the invention.

Fig. 3 illustrates an example of a measurement cell arrangement.

Fig. 4 illustrates elements of a position sensitive device used in a refractometer apparatus of an embodiment.

Fig. 5 illustrates a detailed example of a position sensitive device which may be used in a refractometer apparatus of an embodiment.

Fig. 6 illustrates a side view of a position sensitive device.

Fig. 7 illustrates an example of trimmed concave lens element.

Fig. 8 illustrates a method for optically measuring a refractive index difference according to an embodiment of the invention.

DETAILED DESCRIPTION OF THE PREFERRED EMBODIMENTS

Preferred embodiments are described with reference to the figures. It is noted that the following description contains examples only and should not be construed as limiting the invention.

In the following, similar or same reference signs indicate similar or same elements or operations/steps.

Embodiments generally relate to a refractometer apparatus for optically measuring a refractive index difference comprising a light source unit and a measurement cell arrangement having a reference cell and a sample cell. In particular, a position sensitive device is provided, which comprises a lateral-effect photodiode having an active layer. A first electric contact point is place on one side of the active layer and a second electric contact point on another side of the active layer opposing the first side. The apparatus further comprises an optical focusing module adapted to focus the light beam to a spot on the active layer as well as a concave lens element between the measurement cell arrangement and the position sensitive device. Specifically, the position sensitive device may be adapted to provide position sensitivity so as to enable the continuous determination of the position of the spot on the active layer. By using such a position sensitive device problems encountered with CCD chips are overcome and a cheap and fast detector for a light spot on an active layer can be realized.

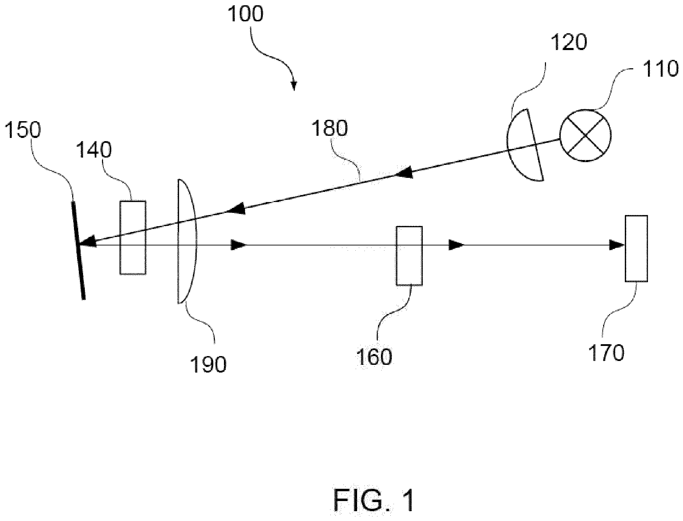

Figure 1 illustrates elements of a refractometer apparatus 100 according to an embodiment of the invention, comprising a light source unit 110, a measurement cell arrangement 140, a position sensitive device (PSD) 170, a reflector 150, a concave lens element 160 and an optical focusing module which may be realized by a first lens 120 and a second lens 190 in this exemplary embodiment.

As can be seen in figure 1, light is output from the light source unit 110 and traverses the first lens 120 basically collimating the light output to a suitable light beam 180 before traversing the second lens 190 basically making the light beam 180 to converge and entering the measurement cell arrangement 140. After exiting the measurement cell arrangement 140, the light beam 180 is refracted depending on the concentration of a sample in the measurement cell arrangement 140. The refracted light beam is then reflected by reflector 150 at a small angle, such as approximately 5 degrees and enters again the measurement cell arrangement 140. By traversing the measurement cell arrangement 140 a second time, the light beam is again refracted, i.e. bent, due to the presence of the sample, wherein the amount of refraction depends on the sample material and its concentration.

In the example of figure 1, after traversing the measurement cell arrangement 140 twice, the light beam 180 again passes through the lens 190 further contributing to the convergence of the light beam 180. Subsequently, the light beam 180 passes through the lens 160, which is a concave lens element reducing the convergence angle of the light beam 180 and thus extending the focal length so that the focus of the apparatus is moved further away from the measurement cell arrangement than without the lens 160. In particular, the apparatus is set up in such a way that the position sensitive device 170 is placed in the focus. Details of how the focus spot may move on the position sensitive device 170, specifically on its active layer, will be described later.

The light source unit 110 is adapted to provide the light for the light beam 180. In other words, the output of the light source unit 110 may already be in the form of some kind of light beam or may be processed by a suitable lens arrangement such as a collimating lens, like lens 120, to provide a light beam suitable for refractive index measurements.

Several light sources may be used in the light source unit 110 including but not limited to different kinds of light emitting devices LEDs, one or more semiconductor lasers, white light source, e.g. high power lamp, such as a tungsten or halogen lamp. Generally, it is desirable to shape the light output of a light source to be suitable for a refractometer by using some kind of collimating optics or beam expanders.

Further, it is generally desirable to provide a monochromatic light beam for refractive index measurements, which may be achieved by using an LED, a laser, or a white light source combined with a narrow band pass filter.

The optical focusing module serves to provide a focusing effect to the light beam so as to converge to a spot on the active layer of the position sensitive device 170. Depending on the light source used and the optical pre-shaping of its output light, the provision of a collimating lens 120 may be needed or may be avoided. In the example of figure 1, the optical focusing module is made up of the collimating lens 120 and the focusing lens 190. As known to the skilled person, a similar effect provided by the two lenses shown may be provided by only one lens or more than two lenses. Further, a similar effect as provided by lens 190 which is traversed twice by the light beam 180, may be obtained by using a smaller lens with a stronger focusing effect which is only traversed once. In essence, the optical focusing module is configured to concentrate or reduce the light beam to a spot on the active layer of the PSD.

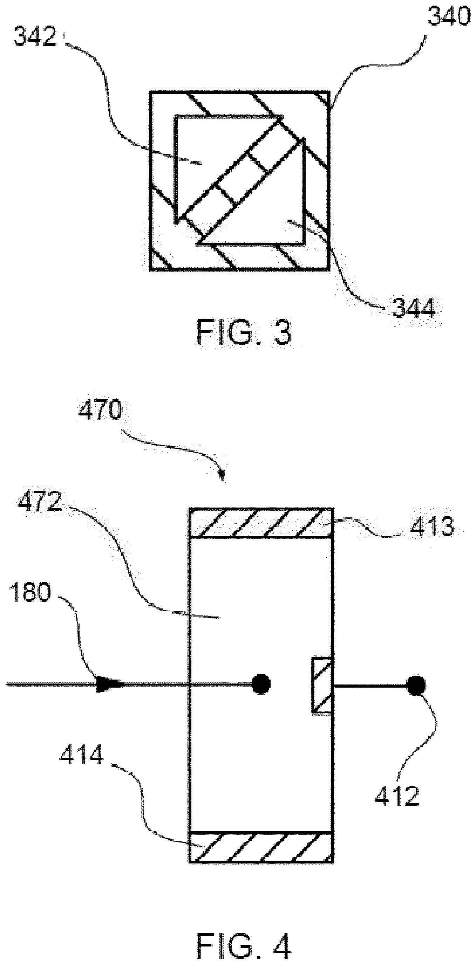

The measurement cell arrangement 140 of the embodiment of figure 1 comprises a reference cell and a sample cell. In one embodiment, the measurement cell arrangement may be constructed, as shown in figure 3, having a reference cell 344 and a sample cell 342. Using a reference cell and a sample cell is typical for a differential refractometer so that the refractometer apparatus in figure 1 may be considered a differential refractometer apparatus. However, the number of cells is not essential and it is also possible to construct a refractometer having only one cell/chamber or more than two cells/chambers.

The reflector 150 is preferably a mirror. Further, the reflector 150 may also contribute to the focusing function of the optical focusing module. For example, the focusing function of the lens 190 may be provided in the reflector 150 by shaping the reflector to act as a focusing mirror. Accordingly, the optical focusing module may be a collimator (lens 120) and/or other focusing lens (lens 190), wherein the focusing function of the focusing lens may be partly or fully integrated within the reflector.

As can be taken from figure 1, the reflector 150 is arranged so as to reflect light of the light beam at an angle, i.e. there is an angle between the propagation direction of the incident light beam and the reflected light beam. This allows to arrange the elements of the refractometer apparatus 100 so that the light beam traverses twice through the measurement cell arrangement 140 but still allows to arrange different optical elements in the incident light beam compared to the reflected light beam. In more detail, as shown in figure 1, the light which has traversed the measurement cell arrangement 140 in a first beam path between the light source unit 110 and the reflector 150 is reflected back by the reflector 150 to the measurement cell arrangement 140 to travel on a second beam path between the reflector 150 and the position sensitive device (PSD) 170.

On the second beam path the measurement cell arrangement 140 is traversed a second time before passing through the concave lens element 160. The concave lens element 160 arranged between the measurement cell arrangement 140 and the position sensitive device 170 receives the light beam refracted by the measurement cell arrangement 140 and reduces its convergence. In other words, since a concave lens has a diverging effect on a light beam, the focal length of the overall optical setup is increased when incorporating a concave lens, such as concave lens element 160. Thus, concave lens element 160 counters the focusing effect of the optical focusing module.

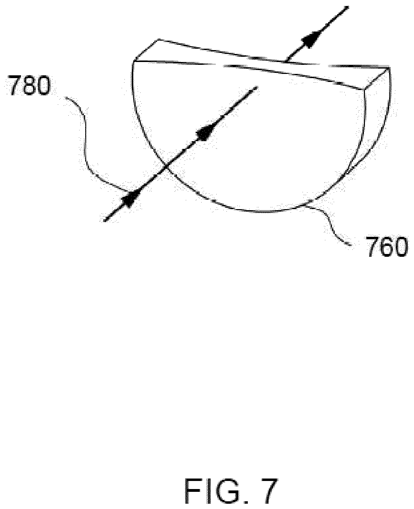

The concave lens element 160 may have at least one concave side, e.g. constituting a plano-concave or a bi-concave lens (see e.g. Fig. 7). By using the concave lens element 160 the focal length is extended so that the position sensitive device can be placed further away from the measurement cell arrangement 140. This allows that the refracted light exiting the measurement cell arrangement 140 at a certain angle is incident on a position of the position sensitive device which is further away from the center of that device than without the concave lens element 160. In other words, the refraction of the light beam can be amplified so that even on a short optical path a strong deflection, i.e. change in substantially vertical direction to the light propagation, can be achieved. Accordingly, a stronger displacement of the spot in the longitudinal direction of the lateral photodiode can be achieved which otherwise would only be possible by a longer path length. As a result, the sensitivity of the apparatus 100 increases, since even a minute change in refraction lead to a detectable movement of the position of the light spot away from the center of the active layer of the lateral diode of the position sensitive device 170.

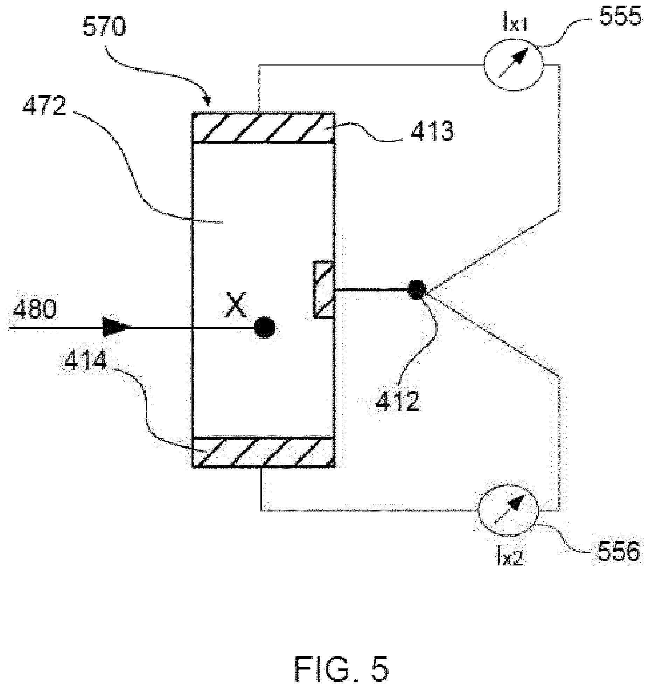

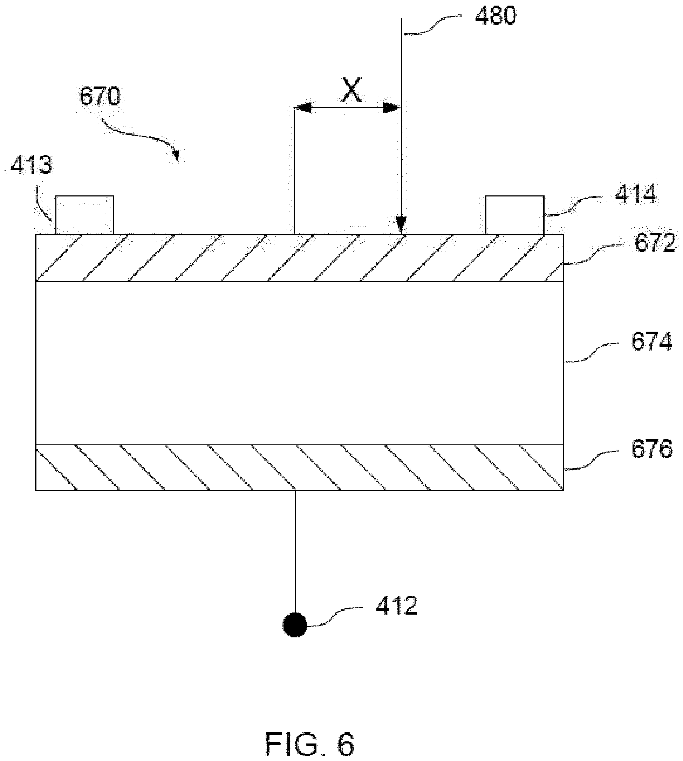

In more detail, the position sensitive device 170 comprises a lateral-effect photodiode or lateral diode having different layers including an active layer 472 for photoelectric conversion. For example, as shown in figure 4, a first and a second electric contact point 413, 414 constituting electrodes for receiving photocurrents which may be used to extract position information are located on opposite sides of the active layer 472 of PSD 470. Further, a common electrode 412 may provide a bias so that a current between common electrode 412 and electrode 413 can be compared to a current between common electrode 412 and electrode 414 when a light beam 180 strikes the active layer. The relationship between the currents gives information about where on the active layer 472 the light beam is incident on the layer and forms a spot. Accordingly, the PSD 170, 270, 470, 570 and 670 are adapted to provide an indication of the position of a spot of the incident light beam on the active layer. Further details of the structure and operation of exemplary PSDs will be described later with respect to figures 5 and 6.

As discussed above, the refractometer apparatus 100 may provide an indication of the position of the spot of the focused incident light beam 180 on the active layer 472 based on the first current from the first electric contact point 413 and the second current from the second electric contact point 414. In particular, the first current and the second current change depending on the position of the spot on the active layer, which means that the first current and the second current differ for different positions of the spot on the active layer allowing position determination using photocurrents.

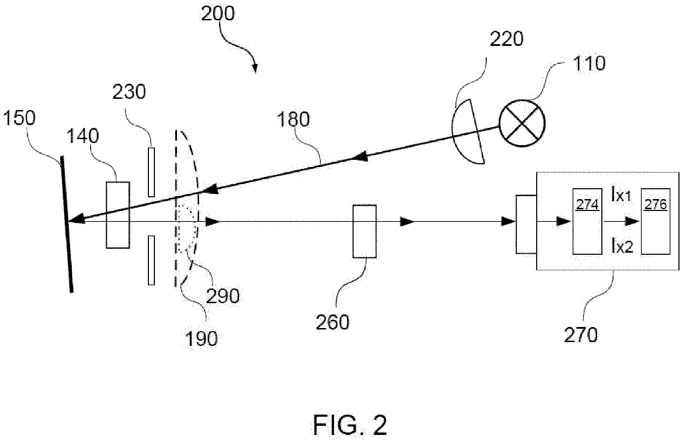

Figure 2 illustrates elements of a refractometer apparatus according to another embodiment of the invention. Specifically, figure 2 provides a more detailed embodiment of the refractometer apparatus of figure 1. Accordingly, the skilled person understands that elements of the apparatus 100 of figure 1 can be combined with elements of the apparatus 200 of figure 2 and vice versa.

In addition to the elements already described above with respect to figure 1, figure 2 illustrates that a small focusing lens 290 (dotted line) affecting only the second beam path may be used instead of the focusing lens 190 (dashed line). Further, an aperture 230 may be located between the focusing lens and the measurement cell arrangement 140. However, as indicated above, the focusing function of the focusing lens may be also placed between the aperture 230 and the measurement cell arrangement 140 or even integrated in reflector 150. The refractometer apparatus 200 of figure 2 further illustrates additional details of PSD 170 called PSD 270 in figure 2 which will be described later.

Similar to the apparatus 100 of figure 1, the light source unit 110 emits light 180 which is collimated by a collimating lens 220. The degree of collimation is chosen such that the light passing through focusing lens 190 illuminates aperture 230 as well as the measurement cell arrangement 140. In particular, the aperture 230 is adapted to limit parts of the light of the light beam to pass the aperture 230 so that the cross section of the passed light beam reaching the measurement cell arrangement 140 is of the order of a side face of the measurement cell arrangement. That is, aperture 230 is chosen so that only relevant parts of the measurement cell arrangement 140 are illuminated and reflections and scattering on edges of the measurement cell arrangement 140 are avoided.

The light beam 180 passing the aperture 230 first enters the sample cell and then the reference cell. Depending on the refractive index increment and/or the concentration of the analyte in the sample cell, the light beam 180 is refracted by a respective angle. The refracted light is then reflected on the reflector 150 and enters again the measurement cell arrangement 140 from behind. By traversing the measurement cell arrangement 140 a second time, the light beam 180 is even more refracted, thus amplifying the refractive angle. The refraction of the refracted light beam is further amplified by the concave lens element 260 and then strikes the active layer of the lateral-effect photodiode of the PSD 270. Depending on the position on the active layer, a first current between the electrodes 412 and 413 and a second current between the electrodes 412 and 414 are obtained which provide an indication of the position.

As mentioned above, the light source unit 110 may comprise one or more of different light sources, such as a white light source having a broad spectrum or one or more LEDs or one or more laserdiodes. In one embodiment, the light source unit 110 may comprise an optical fiber having an interface to be connectable to one or more of the above light sources. Using fiber optics, it is thus possible to separate the light source from the refractometer which may be preferably done for thermal reasons, particularly when the light source used gets easily hot which may change the optimal alignment.

The power range of the light sources is preferably between one and several mW. For example, a light source comprising three LEDs having red, green and blue wavelengths with peak wavelengths around 660 nm, 532 nm and 488 nm, respectively, is particularly preferable. Furthermore, the light source unit 110 may comprise a wavelength selector to switch from a light beam of a first wavelength to a light beam of a second wavelength. In one embodiment, three LEDs may be provided as well as a controller controlling the red, green and blue LEDs and switching between the wavelengths. Switching between different wavelengths is preferable, since the refractive index increment dn/dc has been measured previously for different materials at different wavelengths so that wavelength can be selected for which dn/dc values are known in the literature.

The collimating lens 220 is arranged between the light source unit and the measurement cell arrangement for collimating light of the light beam. In particular, it is placed close to the light source of the light source unit 110 and may be part of the light source unit 110. This lens is chosen according to the beam profile of the light source. In particular, it is clear that a tungsten lamp requires a collimating lens different to the lens arrangement suitable for an LED or optical fiber. In one embodiment, the collimating lens 220 is adjustable so that the focus of the apparatus 200 is set on the active layer of the PSD 270.

The aperture 230 is placed next to the measurement cell arrangement 140 and its opening is adapted to the dimensions of the arrangement 140. In one embodiment, the aperture 230 is chosen large enough to illuminate the sample cell and/or the reference cell completely and small enough to avoid reflections and scattering on the edges of these cells. The size of the opening of aperture 230 may be 0.8 x 1.6 mm.

In one embodiment, the measurement cell arrangement 140 may be realized, as illustrated in figure 3. As shown in figure 3, the measurement cell arrangement 340 comprises a sample cell 342 and a reference cell 344, wherein an angled transparent interface, e.g. glass plate positioned at 45 degrees, separates the reference cell 344 and the sample cell 342. In this example, each cell has three side faces. In one example, the sample cell and/or the reference cell are made of fused silica and each have a volume of approximately 6 to 8 $\mu$L. The outer surfaces of the cells where the light beam enters and exits are preferably made non-reflecting and are preferably optically polished. In figure 3, the two cells/chambers are close to each other as shown having one side face in common. However, the measurement cell arrangement is not limited thereto and the two cells may be separate and distributed in the beam path.

The reflector 150 is arrange to reflect the light of the first beam path between the light source unit and the reflector at an angle of less than 15 degrees, preferably less than 5 degrees, to a second beam path between the reflector 150 and the active layer of the lateral-effect photodiode. For example, the reflector 150 is adjustable and is arranged so that the light beam 180 hits the center of the active layer of the lateral diode of PSD 270 when no sample is provided. The angle between the reflector 150 and the horizontal plane in which the second beam path is located, may be chosen to be approximately 93 degrees. In one embodiment, the reflector 150 is a coated mirror with the dimensions of 10 X 10 mm. The coating may be a silver coating which is protected by an additional coating against aging. Once the light is reflected by the reflector 150, the light traverses again the measurement cell arrangement and passes through the aperture 230.

As in figure 1, the concave lens element 260 of figure 2 is arranged between the measurement cell arrangement 140 and the position sensitive device 270 so as to change the focal length of the light which traversed the measurement cell arrangement 140 twice. Since the light beam traveling on the first beam path does not traverse the concave lens element, thermal variations in the apparatus do affect the position determination at the PSD less. That is, if the light beam traveling on the first beam path were traversing the concave lens element, thermal variations in the apparatus would influencing the position of this lens element would change the position where the light beam hits the measurement cell arrangement which would strongly affect the quality of position determination at the PSD. Accordingly, more stable position determination can be obtained if this lens element is only placed in the second beam path.

Further, the concave lens element 260 is trimmed at one side so as to reduce its size in a direction substantially perpendicular to the light beam propagation direction. This allows arranging the two paths from and to the reflector 150 closer to each other without the light from the light source unit 110 to the measurement cell arrangement 140 going through or being otherwise affected by this lens element. Preferably the light beam along the first beam path and/or the reflected second beam path should be incident substantially perpendicular, i.e. in the range of 85 to 95 degrees, on the front side face of the measurement cell arrangement. Accordingly, the angle between the first beam path and second beam path (see figures 1 and 2) is less than 15 degrees and preferably less than 5 degrees.

In one embodiment, the curvature of the lens 260 is adapted so that the light beam refracted by the measurement cell arrangement 140 is further refracted such that a linear relationship between the refraction by the measurement cell arrangement and the position on the lateral diode of the PSD 270 is maintained. For example, the concave lens element 260 (or 160) is a trimmed bi-concave lens 760, as illustrated in figure 7, which receives a light beam 780 at its upper part. This further helps to avoid scattered or reflected light coming from the light source without passing through the measurement cell arrangement being incident on the PSD.

In one embodiment, the height of the lens may be trimmed so that +/- 1mm of the lens height relative to the center point where the non-refracted light beam is incident is used. Therefore, the space above the trimmed lens is unobstructed and the first light path can be arranged close to the trimmed lens. In other words, the propagation direction of the incident light beam 180 along the first light path can be set close to an orthogonal direction to the front side face of the measurement cell arrangement 140.

The lateral diode of the PSD 270 has a longitudinal dimension, approximately orthogonal to the light beam propagation direction in the second beam path, which provides the desired dynamic range. That is, the longitudinal dimension is chosen such that the refraction of the light beam 180 resulting from traversing the measurement cell arrangement twice and being amplified by the concave lens element can be detected. The lateral diode in the presented examples is a one-dimensional lateral diode since the vertical deflection of the light beam is detected but a two-dimensional lateral diode may be selected to simplify the adjustment of the reflector 150. The size of the one-dimensional lateral diode may be 10 x 2mm, wherein only 80% of the length and width is used for measuring the refraction which allows staying in a highly linear operation range of the diode.

As illustrated in figure 2, the PSD 270 comprises a current measurement unit 274 adapted to measure the first and the second current and a determiner 276 adapted to determine the position of the spot on the active layer from the first and the second current. The current measurement unit 274 and the determiner 276 are shown as part of the PSD for illustrative purposes but may be external units which merely receive photocurrents from the PSD. Accordingly, it is sufficient if the PSD provides an indication of the position, e.g. by providing the two photocurrents, which then can be analyzed and evaluated elsewhere.

In more detail, as illustrated in the PSD 570 of figure 5, the current measurement unit 274 may be realized by two current measurement submodules 555 and 556 providing values for $I_{x1}$ and $I_{x2}$.

The PSD 570 of figure 5 comprises a one-dimensional lateral-effect photodiode with a photosensitive area 472 having two contact points 413 and 414 at opposing sides. Photocurrent generated where the light spot hits the photosensitive area (active layer) needs to travel to the electric contact points, wherein the resistance in the active layer is proportional to the length of the path the current needs to travel. The currents for $I_{x1}$ and $I_{x2}$ follow Kirchhoff's circuit laws. From the two measured currents, the position X where the light beam 480 strikes the active layer 472 can be calculated by using the following formula:

$$X = L/2 \ x \ ((I_{x1} - I_{x2}) / (I_{x1} + I_{x2}))$$

wherein L is the distance between the two electrodes 413 and 414.

According to this formula, the position of the spot on the active layer is determined from the ratio of the difference between the first and the second current to the sum of the first and the second current (total current). By dividing by the total current, the position is basically independent of the incident light intensity and effects of the fluorescence and absorption of the sample are minimized. Since the active layer is usually a very homogeneous resistor, the current in each electric contact point is linearly dependent on the position, thus giving an indication of the position of the spot on the active layer.

Figure 6 shows a side view of the example of the position sensitive device 670, such as position sensitive device 170. The position sensitive device 670 of figure 6 is a monolithic device designed to detect the position of incident light and thus is very different to multi-element detectors, such as CCD chips. In particular, the device 670 is a non-segmented photosensor which makes use of the surface resistance of its photodiode providing continuous electrical signals and offers high position resolution and fast response.

As shown in figure 6, the device 670 comprises three layers 672, 674 and 676 as well as the two electric contact points 413 and 414 constituting electrodes in this example. In this example, the two electrodes 413 and 414 are both formed on the resistive layer 672 which is also a photosensitive area (active layer) to provide position signals.

The three layers 672, 674 and 676 may be part of a lateral-effect photodiode, also known as diode with a lateral effect, having a PN junction for generating photocurrent by means of the photovoltaic effect.

The lateral-effect photodiode of figure 6 has the basic structure of a PIN photodiode. For example, layer 672 corresponds to a p-type region of the semiconductor, layer 674 corresponds to an undoped intrinsic region of the semiconductor and layer 676 corresponds to an n-type region of the semiconductor.

As shown in the example of figure 6, the p-type resistive layer 672 serves as the photosensitive area for photoelectric conversion, whereas the n-type layer forms the backside to which a common electrode 412 is connected.

When the light beam 480 is incident on the photosensitive area of the active layer 672 forming a spot thereon, the electric charges proportional to the incident light are generated at the position of the light spot. The electric charges flow as photocurrents through the layer and can be extracted by the electrodes 413 and 414. The current of electrode 413 $I_{x1}$ and the current of electrode 414 $I_{x2}$ may then be provided to a current measurement unit and determiner as previously explained with respect to figure 5 to determine the position X on the active layer, wherein X designates the distance of the position of the light spot from the center of the active layer. The center may be defined as the position at which a light spot occurs when no sample is present in the measurement cell arrangement.

The PSD 170, 270, 470, 570, 670 discussed above, allows with its lateral diode to determine the position down to the sub-micrometer range with a tolerance of 0.1%. In particular, no discrete pixels, such as in a CCD chip or other diode arrays, limit the resolution so that position sensitivity can be provided enabling the continuous determination of the position of the spot. In contrast to prior art refractometer apparatuses using CCD chips, no complex patterns are imaged on a CCD chip but forming a focused image of substantially a point light source on the active layer is sufficient. Thus, complex image processing can be avoided and sampling rates in the MHz range can be achieved (compared to CCD sampling rates in the kHz range). Due to the elongated form of the lateral diode of the PSD, adjustable glass plates, i.e. a zero plates, are not needed.

Accordingly, high sensitivity and precision may be achieved with an apparatus having a simple optical, mechanical and electronical design.

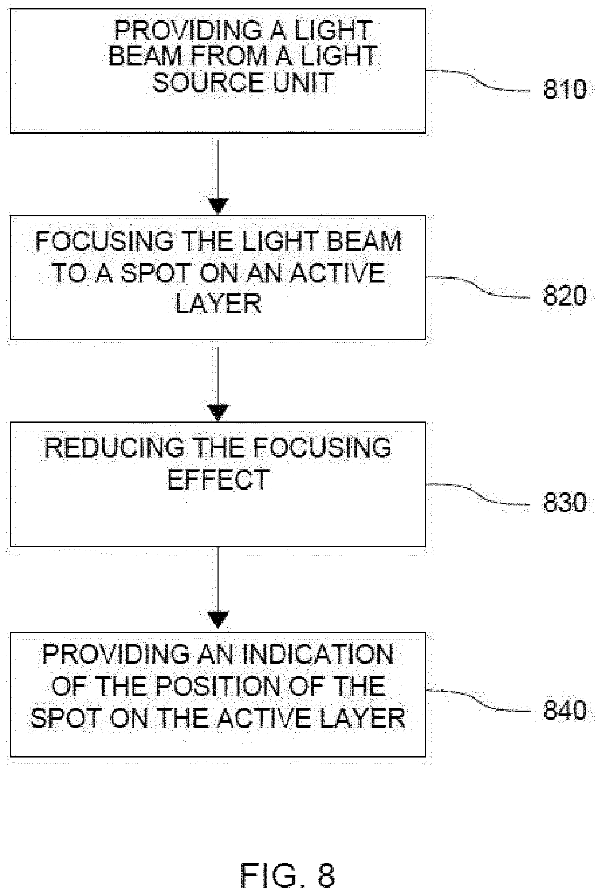

Figure 8 illustrates a method for optically measuring a refractive index difference according to an embodiment of the invention.

The method may be carried out by the refractometer apparatus 100, 200 and comprises a first step 810 of providing a light beam from a light source unit.

In a second step 820, the light beam is focused, i.e. concentrated, by an optical focusing module to a spot on the active layer of the lateral-effect photodiode of a PSD, such as PSD 170, 270, 470, 570, 670, which has a first and a second electric contact point each on opposing sides at the ends in longitudinal direction of the active layer.

In a third step 830, the focusing effect of the optical focusing module is reduced by a concave lens element, and in a fourth step 840 an indication of the position of the spot on the active layer is provided.

As described above, embodiments and examples of the invention allow for optically measuring a refractive index difference. Therefore, refractometer apparatuses and methods may be provided which allow such measurements with high sensitivity and precision.

The invention has been described in relation to particular embodiments and examples which are intended in all aspects to be illustrative rather than restrictive.

## Claims

1. A refractometer apparatus (100, 200) for optically measuring a refractive index difference, comprising
   a light source unit (110) for providing a light beam,
   a measurement cell arrangement (140) having a reference cell (344) and a sample cell (342),
   a position sensitive device (170) which comprises a lateral-effect photodiode having an active layer (472) and a first and a second electric contact point (413, 414) for receiving
   a current each on opposing sides of the active layer (472) an optical focusing module (120, 190) for focusing the light beam to a spot on the active layer (472) a concave lens element (160) arranged between the measurement cell arrangement (140) and the position sensitive device (170), and
   a reflector (150) which is arranged to reflect light of the light beam at an angle, which light has traversed the measurement cell arrangement (140) having the reference cell (344) and the sample cell (342), back to the measurement cell arrangement (140) to traverse the measurement cell arrangement (140) a second time before traversing the concave lens element (160) and being incident on the active layer (472) of the lateral-effect photodiode of the position sensitive device (170), and
   wherein the position sensitive device (170) is adapted to provide an indication of the position of the spot on the active layer (472), wherein the reflector (150) is arranged to reflect the light of a first beam path between the light source unit (110) and the reflector (150) at an angle of less than 15 degrees to a second beam path between the reflector (150) and the active layer (472) of the lateral-effect photodiode, and
   wherein the concave lens element (160) is trimmed at one side so as to reduce its size in one direction substantially perpendicular to the light beam propagation direction, wherein the trimmed side of the concave lens element (160) is arranged close to the first beam path and the first beam path is unobstructed by the concave lens element (160), and wherein the concave lens element (160) is arranged in the second beam path between the measurement cell arrangement (140) and the position sensitive device (170) so as to change the focal length of the light which traversed the measurement cell arrangement (140) twice.

2. The refractometer apparatus according to claim 1,
   wherein the indication of the position of the spot on
   the active layer (472) is based on a first current from the first electric contact point (413) and a second current from

the second electric contact point (414), and wherein the first current and the second current change depending on the position of the spot on the active layer (472).

3. The refractometer apparatus according to claim 2,
   further comprising a current measurement unit (274) adapted to
   measure the first and the second current and a
   determiner (276) adapted to determine the position of the spot
   on the active layer from the first and the second current.

4. The refractometer apparatus according to claim 3,
   wherein the position of the spot on the active layer (472) is determined from the ratio of the difference between the first and the second current to the sum of the first and the second current.

5. The refractometer apparatus according to at least one of claims 3 to 4, wherein the active layer (472) of the lateral-effect photodiode is adapted to provide position sensitivity so as to enable the continuous determination of the position of the spot on the active layer (472).

6. The refractometer apparatus according to at least one of claims 1 to 5, wherein the measurement cell arrangement Z (140) comprises an angled transparent interface separating the reference cell (344) and the sample cell Z (342) each having three side faces.

7. The refractometer apparatus according to at least one of claims 1 to 6, further comprising an aperture (230) Z adapted to limit parts of the light of the light beam to pass the aperture (230) so that the cross section of the passed light beam reaching the measurement cell arrangement (140) is of the order of a side face of the measurement cell arrangement (140).

8. The refractometer apparatus according to at least one of claims 1 to 7, further comprising a collimating lens (220) arranged between the light source unit (110) and the measurement cell arrangement (140) for collimating light of the light beam.

9. The refractometer apparatus according to at least one of claims 1 to 8, wherein the light source unit (110) comprises one or a plurality of LEDs, one or a plurality of lasers, or a lamp.

10. The refractometer apparatus according to at least one of claims 1 to 9, wherein the light source unit (110) comprises an optical fiber having an interface to be connectable to one or a plurality of LEDs, one or a plurality of lasers, or a lamp.

11. The refractometer apparatus according to at least one of claims 1 to 10, wherein the light source unit (110) comprises a wavelength selector to switch from a light beam of a first wavelength to a light beam of a second wavelength.

12. A method for optically measuring a refractive index difference using a refractometer apparatus (100, 200), comprising providing a light beam from a light source unit (110);
    focusing the light beam by an optical focusing module (120, 190) to
    a spot on an active layer (472) of a lateral-effect photodiode of a position sensitive device (170), the position sensitive device (170) having a first and a second electric contact point (413, 414) each on opposing sides of the active layer (472), reducing by a concave lens element (160) the focusing effect of the optical focusing module (120, 190), and providing an indication of the position of the spot on the active layer (472), wherein the refractometer apparatus comprises a reflector (150) which is arranged to reflect the light of the light beam at an angle, which light has traversed a measurement cell arrangement (140) having a reference cell (344) and a sample cell (342), back to the measurement cell arrangement (140) to traverse the measurement cell arrangement (140) a second time before traversing the concave lens element (160) and being incident on the active layer (472) of the lateral-effect photodiode of the position sensitive device (170), wherein the reflector (150) reflects the light of a first beam path between the light source unit (110) and the reflector (150) at an angle of less than 15 degrees to a second beam path between the reflector (150) and the active layer (472) of the lateral-effect photodiode, and wherein the concave lens element (160) is trimmed at one side so as to reduce its size in one direction substantially perpendicular to the light beam propagation direction, wherein the trimmed side of the concave lens element (160) is arranged close to the first beam path and the first beam path is unobstructed by the concave lens element (160), and wherein the concave lens element (160) is arranged in the second beam path between the measurement cell arrangement (140) and the position sensitive device (170) so as to change the focal length of the light which traversed the measurement cell arrangement (140) twice.

**Patentansprüche**

1. Refraktometereinrichtung (100, 200) zur optischen Messung eines Brechungsindexunterschieds, Folgendes umfassend

   eine Lichtquelleneinheit (110) zum Bereitstellen eines Lichtstrahls,

   eine Messzellenanordnung (140), die eine Referenzzelle (344) und eine Probenzelle (342) aufweist,

   eine positionsempfindliche Vorrichtung (170), die eine Seiteneffekt-Fotodiode umfasst, die eine aktive Schicht (472) und einen ersten und einen zweiten elektrischen Kontaktpunkt (413, 414) zum Empfangen eines Stroms jeweils auf gegenüberliegenden Seiten der aktiven Schicht (472) aufweist,

   ein optisches Fokussiermodul (120, 190) zum Fokussieren des Lichtstrahls auf eine Stelle auf der aktiven Schicht (472),

   ein konkaves Linsenelement (160), das zwischen der Messzellenanordnung (140) und der positionsempfindlichen Vorrichtung (170) angeordnet ist, und

   einen Reflektor (150), der angeordnet ist, um Licht des Lichtstrahls in einem Winkel zu reflektieren, das die Messzellenanordnung (140) durchquert hat, die die Referenzzelle (344) und die Probenzelle (342) aufweist, zurück zur Messzellenanordnung (140), um die Messzellenanordnung (140) vor Durchqueren des konkaven Linsenelements (160) ein zweites Mal zu durchqueren, und auf die aktive Schicht (472) der Seiteneffekt-Fotodiode der positionsempfindlichen Vorrichtung (170) einfallend, und

   wobei die positionsempfindliche Vorrichtung (170) angepasst ist, um einen Hinweis auf die Position der Stelle auf der aktiven Schicht (472) bereitzustellen,

   wobei der Reflektor (150) angeordnet ist, um das Licht eines ersten Strahlpfades zwischen der Lichtquelleneinheit (110) und dem Reflektor (150) in einem Winkel von weniger als 15 Grad zu einem zweiten Strahlpfad zwischen dem Reflektor (150) und der aktiven Schicht (472) der Seiteneffekt-Fotodiode zu reflektieren, und

   wobei das konkave Linsenelement (160) auf einer Seite gekürzt ist, um seine Größe in einer Richtung im Wesentlichen senkrecht zu der Lichtstrahlausbreitungsrichtung zu verringern, wobei die gekürzte Seite des konkaven Linsenelements (160) nahe an dem ersten Strahlpfad angeordnet ist, und der erste Strahlpfad von dem konkaven Linsenelement (160) unbehindert ist, und wobei das konkave Linsenelement (160) auf dem zweiten Strahlpfad zwischen der Messzellenanordnung (140) und der positionsempfindlichen Vorrichtung (170) angeordnet ist, um die Brennweite des Lichts, das die Messzellenanordnung (140) zweimal durchquert hat, zu ändern.

2. Refraktometereinrichtung nach Anspruch 1,

   wobei der Hinweis auf die Position der Stelle auf der aktiven Schicht (472) auf einem ersten Strom von dem ersten elektrischen Kontaktpunkt (413) und einem zweiten Strom von dem zweiten elektrischen Kontaktpunkt (414) basiert, und

   wobei sich der erste Strom und der zweite Strom in Abhängigkeit von der Position der Stelle auf der aktiven Schicht (472) ändern.

3. Refraktometereinrichtung nach Anspruch 2,

   weiter umfassend eine Strommesseinheit (274), die angepasst ist, um den ersten und den zweiten Strom zu messen, und einen Bestimmer (276), der angepasst ist, um die Position der Stelle auf der aktiven Schicht von dem ersten und dem zweiten Strom zu bestimmen.

4. Refraktometereinrichtung nach Anspruch 3,

   wobei die Position der Stelle auf der aktiven Schicht (472) aus dem Verhältnis des Unterschieds zwischen dem ersten und dem zweiten Strom zur Summe des ersten und des zweiten Stroms bestimmt wird.

5. Refraktometereinrichtung nach mindestens einem der Ansprüche 3 bis 4, wobei die aktive Schicht (472) der Seiteneffekt-Fotodiode angepasst ist, um Positionsempfindlichkeit bereitzustellen, um die ununterbrochene Bestimmung der Position der Stelle auf der aktiven Schicht (472) zu ermöglichen.

6. Refraktometereinrichtung nach mindestens einem der Ansprüche 1 bis 5, wobei die Messzellenanordnung (140) eine winkelige transparente Schnittstelle umfasst, die die Referenzzelle (344) und die Probenzelle (342) trennt, die jeweils drei Seitenflächen aufweisen.

7. Refraktometereinrichtung nach mindestens einem der Ansprüche 1 bis 6, weiter umfassend eine Öffnung (230), die angepasst ist, um Teile des Lichts des Lichtstrahls, die durch die Öffnung (230) hindurchgeführt werden, zu begrenzen, sodass der Querschnitt des hindurchgeführten Lichtstrahls, der die Messzellenanordnung (140) erreicht, in der Größenordnung einer Seitenfläche der Messzellenanordnung (140) ist.

8. Refraktometereinrichtung nach mindestens einem der Ansprüche 1 bis 7, weiter umfassend eine Kollimationslinse (220), die zwischen der Lichtquelleneinheit (110) und der Messzellenanordnung (140) zum Kollimieren von Licht des Lichtstrahls angeordnet ist.

9. Refraktometereinrichtung nach mindestens einem der Ansprüche 1 bis 8, wobei die Lichtquelleneinheit (110) eine oder eine Vielzahl von LEDs, einen oder eine Vielzahl von Lasern oder eine Lampe umfasst.

10. Refraktometereinrichtung nach mindestens einem der Ansprüche 1 bis 9, wobei die Lichtquelleneinheit (110) eine optische Faser umfasst, die eine Schnittstelle aufweist, um mit einer oder einer Vielzahl von LEDs, einer oder einer Vielzahl von Lasern oder einer Lampe verbindbar zu sein.

11. Refraktometereinrichtung nach mindestens einem der Ansprüche 1 bis 10, wobei die Lichtquelleneinheit (110) einen Wellenlängenselektor zum Umschalten von einem Lichtstrahl einer ersten Wellenlänge zu einem Lichtstrahl einer zweiten Wellenlänge umfasst.

12. Verfahren zur optischen Messung eines Brechungsindexunterschieds unter Verwendung einer Refraktometereinrichtung (100, 200), umfassend
Bereitstellen eines Lichtstrahls aus einer Lichtquelleneinheit (110);
Fokussieren des Lichtstrahls durch ein optisches Fokussiermodul (120,190) auf eine Stelle auf einer aktiven Schicht (472) einer Seiteneffekt-Fotodiode einer positionsempfindlichen Vorrichtung (170), wobei die positionsempfindliche Vorrichtung (170) einen ersten und einen zweiten elektrischen Kontaktpunkt (413, 414) jeweils auf gegenüberliegenden Seiten der aktiven Schicht (472) aufweist,
Verringern, durch ein konkaves Linsenelement (160), des Fokussiereffekts des optischen Fokussiermoduls (120, 190), und
Bereitstellen eines Hinweises auf die Position der Stelle auf der aktiven Schicht (472),
wobei die Refraktometereinrichtung einen Reflektor (150) umfasst, der angeordnet ist, um das Licht des Lichtstrahls in einem Winkel zu reflektieren, das eine Messzellenanordnung (140) durchquert hat, die eine Referenzzelle (344) und eine Probenzelle (342) aufweist, zurück zur Messzellenanordnung (140), um die Messzellenanordnung (140) vor Durchqueren des konkaven Linsenelements (160) ein zweites Mal zu durchqueren, und auf die aktive Schicht (472) der Seiteneffekt-Fotodiode der positionsempfindlichen Vorrichtung (170) einfallend,
wobei der Reflektor (150) das Licht eines ersten Strahlpfades zwischen der Lichtquelleneinheit (110) und dem Reflektor (150) in einem Winkel von weniger als 15 Grad zu einem zweiten Strahlpfad zwischen dem Reflektor (150) und der aktiven Schicht (472) der Seiteneffekt-Fotodiode reflektiert, und
wobei das konkave Linsenelement (160) auf einer Seite gekürzt ist, um seine Größe in einer Richtung im Wesentlichen senkrecht zu der Lichtstrahlausbreitungsrichtung zu verringern, wobei die gekürzte Seite des konkaven Linsenelements (160) nahe an dem ersten Strahlpfad angeordnet ist, und der erste Strahlpfad von dem konkaven Linsenelement (160) unbehindert ist, und wobei das konkave Linsenelement (160) auf dem zweiten Strahlpfad zwischen der Messzellenanordnung (140) und der positionsempfindlichen Vorrichtung (170) angeordnet ist, um die Brennweite des Lichts, das die Messzellenanordnung (140) zweimal durchquert hat, zu ändern.

**Revendications**

1. Appareil réfractomètre (100, 200) pour mesurer optiquement une différence d'indice de réfraction, comprenant
une unité de source lumineuse (110) pour fournir un faisceau lumineux,
un agencement de cellules de mesure (140) ayant une cellule de référence (344) et une cellule d'échantillon (342),
un dispositif sensible à une position (170) qui comprend une photodiode à effet latéral ayant une couche active (472) et des premier et second points de contact électrique (413, 414) pour recevoir un courant, chacun sur des côtés opposés de la couche active (472),
un module de focalisation optique (120, 190) pour focaliser le faisceau lumineux sur un point sur la couche active (472),
un élément de lentille concave (160) agencé entre l'agencement de cellules de mesure (140) et le dispositif sensible à une position (170), et
un réflecteur (150) qui est agencé pour réfléchir une lumière du faisceau lumineux à un angle, ladite lumière ayant traversé l'agencement de cellules de mesure (140) ayant la cellule de référence (344) et la cellule d'échantillon (342), de retour vers l'agencement de cellules de mesure (140) pour traverser l'agencement de cellules de mesure (140) une seconde fois avant de traverser l'élément de lentille concave (160) et étant incidente sur la couche active (472) de la photodiode à effet latéral du dispositif sensible à une position (170), et

dans lequel le dispositif sensible à une position (170) est apte à fournir une indication de la position du point sur la couche active (472),

dans lequel le réflecteur (150) est agencé pour réfléchir la lumière depuis un premier trajet de faisceau entre l'unité de source lumineuse (110) et le réflecteur (150) à un angle inférieur à 15 degrés jusqu'à un second trajet de faisceau entre le réflecteur (150) et la couche active (472) de la photodiode à effet latéral, et

dans lequel l'élément de lentille concave (160) est découpé à un côté de manière à réduire sa taille dans une direction sensiblement perpendiculaire à la direction de propagation de faisceau lumineux, dans lequel le côté découpé de l'élément de lentille concave (160) est agencé à proximité du premier trajet de faisceau et le premier trajet de faisceau est non obstrué par l'élément de lentille concave (160), et dans lequel l'élément de lentille concave (160) est agencé dans le second trajet de faisceau entre l'agencement de cellules de mesure (140) et le dispositif sensible à une position (170) de manière à changer la longueur focale de la lumière qui a traversé deux fois l'agencement de cellules de mesure (140).

2. Appareil réfractomètre selon la revendication 1,
dans lequel l'indication de la position du point sur la couche active (472) est basée sur un premier courant depuis le premier point de contact électrique (413) et un second courant depuis le second point de contact électrique (414), et dans lequel le premier courant et le second courant changent en fonction de la position du point sur la couche active (472).

3. Appareil réfractomètre selon la revendication 2,
comprenant en outre une unité de mesure de courant (274) apte à mesurer les premier et second courants et un déterminateur (276) apte à déterminer la position du point sur la couche active d'après les premier et second courants.

4. Appareil réfractomètre selon la revendication 3,
dans lequel la position du point sur la couche active (472) est déterminée d'après le rapport de la différence entre les premier et second courants sur la somme des premier et second courants.

5. Appareil réfractomètre selon au moins l'une des revendications 3 à 4, dans lequel la couche active (472) de la photodiode à effet latéral est apte à fournir une sensibilité à une position de manière à permettre une détermination continue de la position du point sur la couche active (472).

6. Appareil réfractomètre selon au moins l'une des revendications 1 à 5, dans lequel l'agencement de cellules de mesure (140) comprend une interface transparente inclinée séparant la cellule de référence (344) et la cellule d'échantillon (342), chacune ayant trois faces latérales.

7. Appareil réfractomètre selon au moins l'une des revendications 1 à 6, comprenant en outre une ouverture (230) apte à limiter un passage de parties de la lumière du faisceau lumineux à travers l'ouverture (230) de sorte que la section transversale du faisceau lumineux étant passé atteignant l'agencement de cellules de mesure (140) est de l'ordre d'une face latérale de l'agencement de cellules de mesure (140).

8. Appareil réfractomètre selon au moins l'une des revendications 1 à 7, comprenant en outre une lentille de collimation (220) agencée entre l'unité de source lumineuse (110) et l'agencement de cellules de mesure (140) pour collimater une lumière du faisceau lumineux.

9. Appareil réfractomètre selon au moins l'une des revendications 1 à 8, dans lequel l'unité de source lumineuse (110) comprend une ou une pluralité de DEL, un ou une pluralité de lasers, ou une lampe.

10. Appareil réfractomètre selon au moins l'une des revendications 1 à 9, dans lequel l'unité de source lumineuse (110) comprend une fibre optique ayant une interface pour pouvoir être connectée à une ou une pluralité de DEL, un ou une pluralité de lasers, ou une lampe.

11. Appareil réfractomètre selon au moins l'une des revendications 1 à 10, dans lequel l'unité de source lumineuse (110) comprend un sélecteur de longueur d'onde pour commuter d'un faisceau lumineux d'une première longueur d'onde à un faisceau lumineux d'une seconde longueur d'onde.

12. Procédé pour mesurer optiquement une différence d'indice de réfraction en utilisant un appareil réfractomètre (100, 200), comprenant

une fourniture d'un faisceau lumineux depuis une unité de source lumineuse (110) ;

une focalisation du faisceau lumineux par un module de focalisation optique (120, 190), sur un point sur une couche active (472) d'une photodiode à effet latéral d'un dispositif sensible à une position (170), le dispositif sensible à une position (170) ayant des premier et second points de contact électrique (413, 414), chacun sur des côtés opposés de la couche active (472),

une réduction, par un élément de lentille concave (160), de l'effet de focalisation du module de focalisation optique (120, 190), et

une fourniture d'une indication de la position du point sur la couche active (472),

dans lequel l'appareil réfractomètre comprend un réflecteur (150) qui est agencé pour réfléchir la lumière du faisceau lumineux à un angle, ladite lumière ayant traversé un agencement de cellules de mesure (140) ayant une cellule de référence (344) et une cellule d'échantillon (342), de retour vers l'agencement de cellules de mesure (140) pour traverser l'agencement de cellules de mesure (140) une seconde fois avant de traverser l'élément de lentille concave (160) et étant incidente sur la couche active (472) de la photodiode à effet latéral du dispositif sensible à une position (170),

dans lequel le réflecteur (150) réfléchit la lumière depuis un premier trajet de faisceau entre l'unité de source lumineuse (110) et le réflecteur (150) à un angle inférieur à 15 degrés jusqu'à un second trajet de faisceau entre le réflecteur (150) et la couche active (472) de la photodiode à effet latéral, et

dans lequel l'élément de lentille concave (160) est découpé à un côté de manière à réduire sa taille dans une direction sensiblement perpendiculaire à la direction de propagation de faisceau lumineux, dans lequel le côté découpé de l'élément de lentille concave (160) est agencé à proximité du premier trajet de faisceau et le premier trajet de faisceau est non obstrué par l'élément de lentille concave (160), et dans lequel l'élément de lentille concave (160) est agencé dans le second trajet de faisceau entre l'agencement de cellules de mesure (140) et le dispositif sensible à une position (170) de manière à changer la longueur focale de la lumière qui a traversé deux fois l'agencement de cellules de mesure (140).

FIG. 1

FIG. 2

FIG. 3

FIG. 4

FIG. 5

FIG. 6

FIG. 7

PROVIDING A LIGHT
BEAM FROM A LIGHT
SOURCE UNIT — 810

FOCUSING THE LIGHT BEAM
TO A SPOT ON AN ACTIVE
LAYER — 820

REDUCING THE FOCUSING
EFFECT — 830

PROVIDING AN INDICATION
OF THE POSITION OF THE
SPOT ON THE ACTIVE LAYER — 840

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5398110 A
- US 2005168726 A1

**Non-patent literature cited in the description**

- **YOUNG ZHAO et al.** Determination of saltwater concentration based on optical and electrical dual-differential methods. *Optical Engineering,* vol. 43 (3), 732
- **HIDEYUKI MINATO et al.** Remote refractive index difference meter for salinity sensor. *IEEE Transactions on Instrumentation and Measurement,* vol. 38, 608-612
- Design of a novel refractometer based on electro-optical detection principle. **YINLIN LI et al.** SIGNAL PROCESSING (ICSP), 2010 IEEE 10TH INTERNATIONAL CONFERENCE ON. IEEE, vol. 2, 2543-2546